# EUROPEAN PATENT SPECIFICATION

(11) **EP 0 283 512 B1**
(45) Date of publication and mention of the grant of the patent: **01.05.1996**
(21) Application number: 87906956.5
(22) Date of filing: 28.09.1987
(51) Int. Cl.: C08F 2/00, C08F 4/64, C08F 10/00

(54) **PROCESS FOR THE POLYMERIZATION OF A LIQUID MONOMER**
VERFAHREN ZUR POLYMERISATION EINES FLÜSSIGEN MONOMERS
PROCEDE DE POLYMERISATION D'UN MONOMERE A L'ETAT LIQUIDE

(30) Priority: 26.09.1986 US 911763
(43) Date of publication of application: 28.09.1988
(73) Proprietor: UNION CARBIDE CORPORATION, Danbury Connecticut 06817 (US)
(72) Inventor: MIALKI, William, Stanley, Bridgewater, NJ 08807 (US); NOSHAY, Allen, East Brunswick, NJ 08816 (US); HUSSEIN, Fathi, David, Charleston, WV 25313 (US); BURDETT, Ian, Donald, Charleston, WV 25314 (US)
(74) Representative: Barz, Peter, Dr.
(86) International application number: US8702421
(87) International publication number: WO8802376

(56) References cited:
- EP-A- 0 003 228
- EP-A- 0 019 330
- GB-A- 2 068 981
- GB-A- 2 070 630

## Description

This invention relates to a process for the polymerization of a liquid monomer whereby the performance of the catalyst is enhanced.

GB-A-2068981 discloses a process for producing α-olefin polymers in which a Ziegler catalyst not containing Mg is employed for gas phase polymerization or a combination of slurry or bulk polymerization with gas phase polymerization.

EP-A-19330 discloses an olefin polymerization catalyst comprising (a) the reaction product of an organoaluminum compound and an electron donor and (b) a solid component obtained by halogenating a magnesium compound with a titanium (IV) halide in the presence of a halohydrocarbon, and contacting the halogenated product with a titanium (IV) compound.

Polymerization catalysts generally have various intrinsic limitations, which cannot be simply overcome by minor compositional adjustments. In order to overcome these limitations, a broad range of pretreatments, tailored to specific catalysts, have been proposed. These pretreatments have been found to be effective in improving catalyst activity; stereospecificity; and kinetic decay behavior; and the ability of the catalyst to survive under high polymerization temperatures (increased thermal stability).

The art is constantly seeking to identify that particular set of steps and conditions which will improve the performance of a particular catalyst in a polymerization environment.

An object of this invention, therefore, is to provide a process for the polymerization of one or more monomers in a liquid pool in the presence of a catalyst comprising a catalyst precursor, usually a solid complex component, which includes magnesium, titanium, chlorine, and an electron donor; an organoaluminum compound; and a selectivity control agent whereby the activity of the catalyst is improved as well as the other mentioned characteristics.

According to the present invention, a process for the polymerization of a liquid alpha-olefin per se or in combination with one or more other alpha-olefins, which are themselves liquids or are dissolved therein, each alpha-olefin having 2 to 12 carbon atoms, has been discovered comprising the following steps, step (a) being carried out in the liquid phase and step (b) being carried out in the gas phase:
(a) admixing a catalyst comprising (i) a catalyst precursor, which includes magnesium, titanium, chlorine, and an electron donor; (ii) a hydrocarbylaluminum cocatalyst; (iii) a selectivity control agent, said selectivity control agent being different from the electron donor; and (iv) hydrogen with the alpha-olefin(s), the ratio, by weight, of alpha-olefin(s) to catalyst precursor being at least about 6,000:1, in a liquid phase reactor for a residence time in the range of 10 to 400 seconds at a temperature in the range of 20 to 100°C whereby the alpha-olefin(s) are partially polymerized; and
(b) introducing the mixture from step (a) into at least one gas phase reactor at a temperature in the range of 40 to 150°C in such a manner that the unpolymerized alpha-olefin is substantially polymerized.

The catalyst is made up of a catalyst precursor, which includes magnesium, titanium, chlorine, and an electron donor; an organoaluminum compound, which can be referred to as a cocatalyst; and a selectivity control agent. The selectivity control agent is defined as an additive, which modifies the catalyst precursor in such a manner as to increase the overall percentage of isotactic crystalline polymer produced.

A description of one embodiment of the catalyst can be found in US-A-4,414,132. In this case, the catalyst precursor is obtained by halogenating a magnesium compound having the formula MgR₂₋ₙXₙ wherein R is an alkoxide or aryloxide group, each R being alike or different, X is a halogen, and n = 0 or 1 with a tetravalent titanium halide in the presence of a halohydrocarbon and an electron donor; contacting the halogenated product with a tetravalent titanium halide; optionally treating the resulting solid with an aromatic acid chloride; washing the halogenated product to remove unreacted titanium compounds; and recovering the solid product.

The atomic or molar ratios of catalyst components are generally as follows:

| Ratio | Broad Range | Preferred Range |
|---|---|---|
| Mg to Ti | 1:1 to 50:1 | 3:1 to 30:1 |
| Cl to Mg | 1:1 to 5:1 | 2:1 to 3:1 |
| Mg to electron donor | 0.1:1 to 100:1 | 1:1 to 60:1 |
| Cocatalyst to Ti | 10:1 to 200:1 | 20:1 to 100:1 |
| Cocatalyst to selectivity control agent | 0.1:1 to 100:1 | 0.2:1 to 50:1 |

Suitable halogen containing magnesium compounds that can be used to prepare the catalyst precursor are alkoxy and aryloxy magnesium halides such as isobutoxy magnesium chloride, ethoxy magnesium bromide, phenoxy magnesium iodide, cumyloxy magnesium bromide, and naphthenoxy magnesium chloride.

Magnesium compounds which can be used are magnesium dialkoxides, diaryloxides, and carboxylates having 2 to 24 carbon atoms such as magnesium di-iso-propoxide, magnesium diethoxide, magnesium dibutoxide, magnesium diphenoxide, magnesium dinaphthenoxide, and ethoxy magnesium isobutoxide, magnesium dioctanoate, and magnesium dipropionate.

Magnesium compounds having one alkoxide and aryloxide group can also be employed. Examples of such compounds are ethoxy magnesium phenoxide and napthenoxide magnesium isoamyloxide. Also suitable are compounds having one carboxylate group and one alkoxide, aryloxide, or halide group such as ethoxy magnesium octanoate, phenoxy magnesium propionate, and chloromagnesium dodecanoate.

Suitable halides of tetravalent titanium include aryloxy- or alkoxy di- and -trihalides, such as dihexoxy titanium dichloride, diethoxy titanium dibromide, isopropoxy titanium triiodide, and phenoxy titanium trichloride; titanium tetrahalides, such as titanium tetrachloride, are preferred.

The halohydrocarbons employed can be aromatic or aliphatic. Each aliphatic halohydrocarbon preferably contains from 1 to 12 carbon atoms and at least 2 halogen atoms. The aliphatic halohydrocarbons include dibromomethane, trichloromethane, 1,2-dichloroethane, dichlorobutane, 1,1,3-trichloroethane, trichlorocyclohexane, dichlorofluoroethane, trichloropropane, trichlorofluorooctane, dibromodifluorodecane, hexachloroethane, and tetrachloroisooctane. Carbon tetrachloride and 1,1,3-trichloroethane are preferred. Aliphatic halohydrocarbons containing only one halogen atom per molecule such as butyl chloride and amyl chloride, can also be employed. Suitable aromatic halohydrocarbons include chlorobenzene, bromobenzene, dichlorobenzene, dichlorodibromobenzene, naphthyl chloride, chlorotoluene, and dichlorotoluene. Chlorobenzene is the most preferred halohydrocarbon.

Suitable electron donors, which can be used in the Mg/Ti complex (as an inner donor) or as a selectivity control agent (as an outer donor) separately or complexed with the organoaluminum compound, are ethers, mono- or polycarboxylic acid esters, ketones, phenols, amines, amides, imines, nitriles, silanes, phosphines, phosphites, stilbenes, arsines, phosphoramides, and alcoholates. It is understood, however, that the selectivity control agent (the outer donor) must be different from the electron donor, i.e., the inner donor.

Examples are esters of carboxylic acids such as ethyl and methyl benzoate, p-methoxy ethyl benzoate, p-ethoxy methyl benzoate, p-ethoxy ethyl benzoate, ethyl acrylate, methyl methacrylate, ethyl acetate, p-chloro ethyl benzoate, p-amino hexyl benzoate, isopropyl naphthenate, n-amyl toluate, ethyl cyclohexanoate, and propyl pivalate. Additional examples are N,N,N',N'-tetramethylethylene diamine, 1,2,4-trimethyl piperazine, and 2,2,6,6-tetramethyl piperidine.

When the electron donor for use in preparing the catalyst precursor (the inner donor) is the preferred ethyl benzoate, the preferred electron donor for use as a selectivity control agent (the outer donor) is para-ethoxy ethyl benzoate.

The hydrocarbyl aluminum cocatalyst can be represented by the formula R₃Al wherein each R is an alkyl, cycloalkyl, aryl, or hydride radical; at least one R is a hydrocarbyl radical; two or three R radicals can be joined in a cyclic radical forming a heterocyclic structure; each R can be alike or different; and each R, which is a hydrocarbyl radical, has 1 to 20 carbon atoms, and preferably 1 to 10 carbon atoms. Further, each alkyl radical can be straight or branched chain and such hydrocarbyl radical can be a mixed radical, i.e., the radical can contain alkyl, aryl, and/or cycloalkyl groups. Examples of suitable radicals are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, naphthal, methylnaphthyl, cyclohexyl, cycloheptyl, and cyclooctyl.

Examples of suitable hydrocarbyl aluminum compounds are as follows: triisobutylaluminum, trihexylaluminum, di-isobutylaluminum hydride, dihexylaluminum hydride, isobutylaluminum dihydride, hexylaluminum dihydride, di-isobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthyaluminum, and tritolylaluminum. The preferred hydrocarbyl aluminums are triethylaluminum, triisobutylaluminum, trihexylaluminum, di-isobutylaluminum hydride, and dihexylaluminum hydride.

The acid halide mentioned above is the compound corresponding to the ester compound used as the inner electron donor. Preferably, the halide is a chloride or bromide. The acid halide can contain 7 to 22 carbon atoms and one or more aromatic rings.

The first step is a liquid monomer polymerization, i.e., a liquid phase polymerization, in which preferably no more than about 10 percent by weight of the polymer produced in subject process is formed. This first step (step (a)) can be carried out in a conventional liquid phase reactor constructed of a material inert to the reaction. It is preferably carried out in a loop reactor. The reactor is filled with a liquid containing one liquid alpha-olefin by itself or in combination with one or more other alpha-olefins, which are themselves liquids or gases dissolved in the liquid, each alpha-olefin having 2 to 12 carbon atoms. While the preferred liquid monomer is liquid propylene other liquid or soluble alpha-olefins, which can be used are 1-butene, 1-hexene, or 1-dodecene. Examples of alpha-olefins which can be dissolved in the liquid pool are ethylene and propylene.

The catalyst precursor, in slurry form, together with the cocatalyst, selectivity control agent, alpha-olefin, and hydrogen are continuously fed into the reactor in the desired ratios.

The ratio, by weight, of alpha-olefin(s) to catalyst precursor in the liquid phase reactor, i.e., the first step, is preferably at least about 6,000:1 and more preferably in the range of 9,000:1 to 50,000:1; the residence time in the liquid phase reactor is in the range of 10 to 400 seconds and preferably 40 to 200 seconds; the temperature maintained in the liquid phase reactor is 20 to 100°C and is preferably 40 to 80°C; the pressure is sufficient to keep the monomer(s) liquid, preferably 1.136 to 5.617 MPa (150 to 800 psig) and more preferably 1.48 to 4.238 MPa (200 to 600 psig); the mole ratio of hydrogen to alpha-olefin(s) is preferably in the range of 0.0005:1 to 0.01:1 and more preferably 0.001:1 to 0.005:1; the catalyst, hydrogen and monomer(s) are preferably fed into the liquid phase reactor at a rate sufficient to produce 50 to 2000 kg of polymer per kg of catalyst precursor and more preferably 100 to 1500 kg of polymer per kg of catalyst precursor.

The mixture of catalyst and liquid monomer(s) is continuously circulated during the residence period and continuously discharged into a gas phase reactor, preferably a fluidized bed reactor, thereafter. Conventional circulating means such as the impeller pump mentioned in the examples are used. It should be emphasized that in the preferred mode there is essentially no delay between the first and second steps; however, a ramping technique can be used between steps, if desired, whereby the mixture of catalyst and liquid monomer(s) passes through a temperature gradient in which the temperature of the mixture is gradually increased from the liquid phase reactor temperature to the gas phase reactor temperature in a stepwise fashion. This gradual ramp should be accomplished, however, in a total elapsed time of no more than about 400 seconds. In addition to the mixture from step (a), which includes catalyst, alpha-olefin. and polymerized alpha-olefin, alpha-olefin monomer(s) and hydrogen can also be introduced into the gas phase reactor.

The gas phase reactor can be the fluidized bed reactor described in US-A-4,482,687 or another conventional reactor for the gas phase production of, for example, polypropylene or propylene copolymers. The bed is usually made up of the same granular resin that is to be produced in the reactor. Thus, during the course of the polymerization, the bed comprises formed polymer particles, growing polymer particles, and catalyst particles fluidized by polymerizable and modifying gaseous components introduced at a flow rate or velocity sufficient to cause the particles to separate and act as a fluid. The fluidizing gas is made up of the initial feed, make-up feed, and cycle (recycle) gas, i.e., monomer and, if desired, modifiers and/or an inert carrier gas.

The essential parts of the reactor are the vessel, the bed, the gas distribution plate, inlet and outlet piping, a compressor, a cycle gas cooler, and a product discharge system. In the vessel, above the bed, there is a velocity reduction zone, and in the bed, a reaction zone. Both are above the gas distribution plate.

Variations in the reactor can be introduced if desired. One involves the relocation of the cycle gas compressor from upstream to downstream of the cooler and another involves the addition of a vent line from the top of the product discharge vessel (stirred product tank) back to the top of the liquid phase reactor to improve the fill level of the product discharge vessel.

The fluidized bed reactor used in the second step is preferably operated at a temperature in the range of 40 to 150°C and more preferably 60 to 120°C and a pressure of preferably (100 to 700 psig) and more preferably (250 to 550 psig). The velocity of the fluidizing gas is preferably in the range of 0.3 to 0.92 m/s (0.1 to 3.0 feet per second) and more preferably 0.15 to 0.61 m/s (0.5 to 2.0 feet per second). The mole ratio of hydrogen to alpha-olefin(s) in the fluidized bed reactor is preferably in the range of 0.005:1 to 0.2:1 and is more preferably in the range of 0.01:1 to 0.1:1.

Where it is desired to produce a homopolymer such as polypropylene or a random copolymer such as a propylene/ethylene random copolymer, one fluidized bed reactor is used. In the case of impact grade copolymers, a second fluidized bed reactor is needed. In all cases the reactors, i.e., the loop reactor in which the first step is carried out, the second reactor, i.e., the fluidized bed reactor, and, if required, a third reactor, again a fluidized bed, are operated continuously, in-line.

The invention is illustrated by the following examples:

### EXAMPLES 1 - 6

A loop reactor having a jacketed section for heat removal is filled with liquid propylene. To this reactor is charged a prepared catalyst precursor having the following approximate composition: TiCl₄ ^{·}12 MgCl₂ ^{·}2 C₆H₅COOC₂H₅. The catalyst precursor is in slurry form and conveyed to the loop reactor using liquid propylene. The weight ratio of liquid propylene to catalyst precursor is 12,500:1.2 (10,417:1). A cocatalyst, triethylaluminum, and a selectivity control agent, para-ethoxy ethyl benzoate, in a mole ratio of about 3:1 are fed into the reactor at the same time as the catalyst precursor. The atomic ratio of aluminum to titanium is 36. Hydrogen is also fed into the loop reactor in a mole ratio of hydrogen to liquid propylene of 0.002:1. The pressure in the loop reactor is 3.893 MPa (550 psi) the temperature is about 55°C; there are 1300 kg of polypropylene formed per kg of catalyst precursor; the flow rate through the loop reactor is about 5700 kg (12,500 pounds) of mixture of catalyst and liquid propylene per hour; and the residence time in the loop reactor is 95 seconds.

The mixture is continuously circulated through the loop reactor by means of a single semi-open impeller centrifugal pump; and is continuously discharged from the loop reactor into a fluidized bed reactor where the main polymerization takes place. The conditions under which the fluidized bed reactor is operated are approximately as follows:
- temperature:: 67°C
- pressure:: 3.48 MPa (490 psig)
- flow rate:: about 5700 kg (12,500 pounds) per hour of mixture of catalyst and liquid propylene from the loop reactor plus 3648 kg (8000 pounds) per hour of propylene fed directly to the fluidized bed reactor
- fluidizing gas velocity:: 0.24 m/s (0.8 foot per second)
Hydrogen is also fed into the fluidized bed reactor in a mole ratio of hydrogen to propylene of 0.02:1.

No additional catalyst precursor, cocatalyst, or selectivity control agent are added to the fluidized bed reactor.

The example is repeated omitting the first step. In this case, the catalyst and propylene are charged directly into the fluidized bed reactor.

The two step and the one step examples are repeated twice.

The Table shows the following variables and results:
1. Al/Ti atomic ratio
2. Xylene solubles: since non-crystalline polypropylene is soluble in xylene and crystalline polypropylene, which is preferred, is not, the measure of xylene solubles is an indication of how much crystalline polypropylene is being produced. The value is given in percent by weight based on the total weight of the polymer. A value of less than 6 percent is commercially desirable.
3. Total productivity with first step is given in thousands of kg of polymer per kg of titanium. This shows the amount of polymer produced by the two step process, i.e., the invention.
4. Productivity without first step is also given in thousands of kg of polymer per kg of titanium. This indicates productivity using only the fluidized bed reactor.
5. Percent productivity improvement gives the percentage of productivity increase of the fourth column over the fifth column, i.e., example 1 is compared with example 2; example 3 with example 4; and example 5 with example 6.

Note: The data in the table demonstrate that the use of the first step (step (a)) results in a substantial improvement in catalyst polymerization productivity. This increased productivity is a reflection of improved catalyst activity, stereospecificity, kinetic decay behavior, and thermal stability.

**TABLE**

| Example | Al/Ti | Xylene Solubles | Catalyst productivity With 1st Step | Catalyst productivity without 1st Step | % Catalyst productivity Improvement |
|---|---|---|---|---|---|
| 1 | 36 | 3.4 | 690 | - | 24.3 |
| 2 | 36 | 3.4 | - | 555 | - |
| 3 | 35 | 3.7 | 740 | - | 25.9 |
| 4 | 35 | 3.7 | - | 588 | - |
| 5 | 31 | 2.8 | 625 | - | 37.4 |
| 6 | 31 | 2.8 | - | 455 | - |

## Claims

1. A process for the polymerization of a liquid alpha-olefin per se or in combination with one or more other alpha-olefins, which are themselves liquids or are dissolved therein, each alpha-olefin having 2 to 12 carbon atoms, comprising the following steps effected continuously, step (a) being carried out in the liquid phase and step (b) being carried out in the gas phase:
(a) admixing a catalyst comprising (i) a catalyst precursor which includes a complex of magnesium, titanium, a halogen and an electron donor as an inner donor; (ii) a hydrocarbylaluminum cocatalyst; (iii) a selectivity control agent as an outer donor, said selectivity control agent being different from the electron donor, and hydrogen with the alpha-olefin(s), the ratio, by weight, of alpha-olefin(s) to catalyst precursor being at least 6000:1, in a liquid phase reactor for a residence time in the range of 10 to 400 seconds at a temperature in the range of 20 to 100°C, whereby the alpha-olefin(s) are partially polymerized; and
(b) introducing the mixture from step (a) into at least one gas phase reactor at a temperature in the range of 40 to 150°C in such a manner that the unpolymerized alpha-olefin is substantially polymerized.

2. The process defined in claim 1 wherein at least one liquid alpha-olefin is liquid propylene.

3. The process defined in claim 2 wherein ethylene is dissolved in the liquid propylene.

4. The process defined in any one of claims 1 to 3 wherein the atomic ratio of aluminum to titanium is in the range of 10:1 to 200:1.

5. The process defined in any one of claims 1 to 4 wherein the molar ratio of cocatalyst to selectivity control agent is in the range of 0,1:1 to 100:1.

6. The process defined in any one of claims 1 to 5 wherein, in step (a), the ratio, by weight, of alpha-olefin(s) to catalyst precursor is in the range of 9000:1 to 50,000:1; the residence time is in the range of 40 to 200 seconds; and the temperature is in the range of 40 to 80°C.

7. The process defined in any one of claims 1 to 6 wherein the electron donor is ethyl benzoate and the selectivity control agent is para-ethoxy ethyl benzoate.

## Patentansprüche

1. Verfahren zur Polymerisation eines flüssigen alpha-Olefins per se oder in Kombination mit einem oder mehreren anderen alpha-Olefinen, die selbst Flüssigkeiten sind oder darin gelöst sind, wobei jedes alpha-Olefin 2 bis 12 Kohlenstoffatome aufweist, umfassend die folgenden kontinuierlich durchgeführten Stufen, wobei Stufe (a) in der flüssigen Phase und Stufe (b) in der Gasphase durchgeführt wird:
(a) Mischen eines Katalysators, der (i) eine Katalysator-Vorstufe, die einen Komplex von Magnesium, Titan, einem Halogen und einem Elektronendonor als innerem Donor einschließt; (ii) einen Hydrocarbylaluminium-Cokatalysator; (iii) ein Selektivitätsregulierungsmittel als äußeren Donor, das vom Elektronendonor verschieden ist, umfaßt, und von Wasserstoff mit dem bzw. den alpha-Olefin(en), wobei das Gewichtsverhältnis von alpha-Olefin(en) zu Katalysator-Vorstufe mindestens 6000:1 beträgt, in einem Flüssigphasen-Reaktor für eine Verweilzeit im Bereich von 10 bis 400 Sekunden bei einer Temperatur im Bereich von 20 bis 100°C, wodurch das bzw. die alpha-Olefin(e) teilweise polymerisiert werden; und
(b) Einführen der Mischung aus Stufe (a) in mindestens einen Gasphasen-Reaktor bei einer Temperatur im Bereich von 40 bis 150°C auf solche Weise, daß das nicht polymerisierte alpha-Olefin im wesentlichen polymerisiert wird.

2. Verfahren nach Anspruch 1, in welchem mindestens ein flüssiges alpha-Olefin flüssiges Propylen ist.

3. Verfahren nach Anspruch 2, in welchem Ethylen im flüssigen Propylen gelöst wird.

4. Verfahren nach irgendeinem der Ansprüche 1 bis 3, in welchem das Atomverhältnis von Aluminium zu Titan im Bereich von 10:1 bis 200:1 liegt.

5. Verfahren nach irgendeinem der Ansprüche 1 bis 4, in welchem das Molverhältnis von Cokatalysator zu Selektivitätsregulierungsmittel im Bereich von 0,1:1 bis 100:1 liegt.

6. Verfahren nach irgendeinem der Ansprüche 1 bis 5, in welchem in Stufe (a) das Gewichtsverhältnis von alpha-Olefin(en) zu Katalysator-Vorstufe im Bereich von 9000:1 bis 50000:1 liegt; die Verweilzeit im Bereich von 40 bis 200 Sekunden liegt; und die Temperatur im Bereich von 40 bis 80°C liegt.

7. Verfahren nach irgendeinem der Ansprüche 1 bis 6, in welchem der Elektronendonor Ethylbenzoat ist und das Selektivitätsregulierungsmittel para-Ethoxyethylbenzoat ist.

## Revendications

1. Procédé de polymérisation d'une α-oléfine à l'état liquide séparément ou en conjonction avec une ou plusieurs autres α-oléfines, qui sont elles-mêmes à l'état liquide ou en solution dans celle-ci, chaqueα-oléfine comportant de 2 à 12 atomes de carbone, procédé comprenant les étapes suivantes dont l'exécution se fait en continu, l'étape (a) étant conduite en phase liquide et l'étape (b) étant conduite en phase gazeuse:
(a) le mélange d'un catalyseur comprenant (i) un précurseur de catalyseur qui contient un complexe de magnésium, de titane, un halogène et un donneur d'électrons à titre de donneur interne; (ii) un co-catalyseur à base d'hydrocarbylaluminium; (iii) un agent de régulation de la sélectivité à titre de donneur externe, ledit agent de régulation de la sélectivité étant différent du donneur d'électrons, et d'hydrogène avec la ou les α-oléfines, le rapport, en poids, de la ou des α-oléfines au précurseur de catalyseur étant au moins égal à 6000:1, dans un réacteur en phase liquide en veillant à ce que le temps de séjour soit compris dans l'intervalle de 10 à 400 secondes à une température comprise dans la plage de 20 à 100°C, de manière à ce que la ou les α-oléfines subissent une polymérisation partielle; et
(b) l'introduction du mélange obtenu à l'étape (a) dans au moins un réacteur en phase gazeuse à une température comprise dans la plage de 40 à 150°C de manière à ce que l'essentiel de l'α-oléfine non polymérisée soit polymérisé.

2. Procédé tel que défini dans la revendication 1, dans lequel au moins une α-oléfine liquide est le propylène à l'état liquide.

3. Procédé tel que défini dans la revendication 2, dans lequel l'éthylène est mis en solution dans du propylène à l'état liquide.

4. Procédé tel que défini dans l'une quelconque des revendications 1 à 3, dans lequel le rapport atomique de l'aluminium au titane est compris dans l'intervalle de 10:1 à 200:1.

5. Procédé tel que défini dans l'une quelconque des revendications 1 à 4, dans lequel le rapport molaire du cocatalyseur à l'agent de régulation de la sélectivité est compris dans l'intervalle de 0,1:1 à 100:1.

6. Procédé tel que défini dans l'une quelconque des revendications 1 à 5, dans lequel, au cours de l'étape (a), le rapport, en poids, de la ou des α-oléfines au précurseur de catalyseur est compris dans l'intervalle de 9000:1 à 50 000:1 ; le temps de séjour étant compris dans l'intervalle de 40 à 200 secondes; et la température étant comprise dans la plage de 40 à 80°C.

7. Procédé tel que défini dans l'une quelconque des revendications 1 à 6, dans lequel le donneur d'électrons est le benzoate d'éthyle et l'agent de régulation de la sélectivité est le benzoate de para-éthoxy-éthyle.
